# EUROPEAN PATENT APPLICATION

(11) **EP 2 647 752 A1**
(43) Date of publication of application: **09.10.2013**
(21) Application number: 13162522.0
(22) Date of filing: 05.04.2013
(51) Int. Cl.: D06F 37/00

(54) **Annular sealing device**

(30) Priority: 06.04.2012 IT TO20120307
(71) Applicant: Aktiebolaget SKF, 41550 Göteborg (SE)
(72) Inventor: Foti, Claudio, 10046 Poirino (TO) (IT)
(74) Representative: Tedeschini, Luca

(57) **Abstract**

A sealing device (1) including an annular shield (5) and an elastomeric sealing element (6) having: a first lip (7) which extends radially so as to protrude towards the interior and axially from the side of a first face (8) of the annular shield (5); a second annular lip (9) which extends radially so as to protrude towards the interior and axially from the side of a second face (10) of the annular shield (5), opposite to the first face (8); and a third lip (11) which is arranged between the first and the second lips (7, 9); the third lip (11) axially extends from the same side as the first lip (7), axially spaced apart therefrom; the second lip (7) and the third lip (11) extend from a common annular root portion (14) defining an elastic hinge (C) thus forming a "V" therebetween for rotating together as a rocker arm; the undeformed first, second and third lips (7, 9, 11) are radially internally delimited by respective edges (17, 18, 19) which have a substantially circular shape and the edges of the first and second lips (7, 9) have a smaller diameter than the diameter (D1) of the edge of the third lip (11).

## Description

### BACKGROUND OF THE INVENTION

The present invention relates to an annular sealing device adapted to be interposed between two relatively rotating mechanical elements; in particular, the sealing device of the invention is conceived to be used on an electric household appliance, and is specifically adapted to be inserted on the actuating shaft of the drum of a washing machine for implementing a seal between two relatively rotating members consisting of the shaft itself and the washing tank, in which in use the drum rotate, in order to retain, on the one hand, a washing fluid in the tank, so as to prevent leaks, and on the other hand, protect a bearing supporting the drum driving shaft from water infiltrations, all ensuring an excellent seal with minimal frictions and noise.

EP 1514966A1 describes several arrangements of sealing assemblies adapted to prevent water leaks from the tank at the passage seat for the drum driving shaft and likewise to protect the support bearings of such drum shaft; in all these arrangements, the sealing assemblies used, having one or more sealing lips, only implement a radial seal, directly on the drum driving shaft. In some embodiments, one of the sealing lips is charged by a toroidal spring, which has the purpose of increasing the radial pressure exerted by the lip; in all cases, the sealing assembly must then be at least partly protected from the contact with the washing fluid, on the side facing the tank, by means of a rigid plastic shield, which shield, however, does not cooperate with any of the sealing lips.

However, the sealing assemblies shown in EP 1514966A1, briefly described above, have several drawbacks, especially in the arrangements disclosed. Firstly, they have high friction, connected with the relatively high contact pressures exerted by the sealing lips, especially if they are charged by springs. This leads to high energy consumptions of the electric household appliance and above all, to an early wear of the sealing lips. Secondly, during the insertion of the drum driving shaft into the passage defined by the annular sealing lips, a part of the lubrication grease arranged close to the water sealing lip, which in use faces the sealing seat, may be removed. This further decreases useful life of the sealing lips and increases the frictions. Finally, the overall dimensions of the sealing assembly and of the related protective shield are relatively high.

### SUMMARY OF THE INVENTION

The object of the present invention is to provide an annular sealing device specifically designed to be used on electric household appliances, and thus characterized by cost-effective construction solutions, which is free from the above-described drawbacks and especially capable of ensuring an excellent seal towards the washing fluid present in the tank of a washing machine, accompanied by reduced frictions and thus, by a low energy consumption, low or absent noise, small overall dimensions and which ensures an optimal lubrication of the sealing lip arranged in use towards the washing fluid.

A sealing device is thus provided according to the invention, in particular insertable between two members in relative rotation between which a washing fluid is present, as defined in claim 1.

### BRIEF DESCRIPTION OF THE DRAWINGS

Features and advantages of the present invention will appear clearly from the following description of a non-limiting embodiment thereof, made with reference to the figures in the accompanying drawings, in which:
- figure 1 shows an orthogonal elevation view, seen in section according to a radial plane, of a sealing device implemented according to the invention and shown before the insertion in a working position between two relatively rotating members, only diagrammatically shown for simplicity; and
- figure 2 diagrammatically shows the operation during the assembly step thereof of the sealing device of figure 1.

### DETAILED DESCRIPTION OF PREFERRED EMBODIMENTS

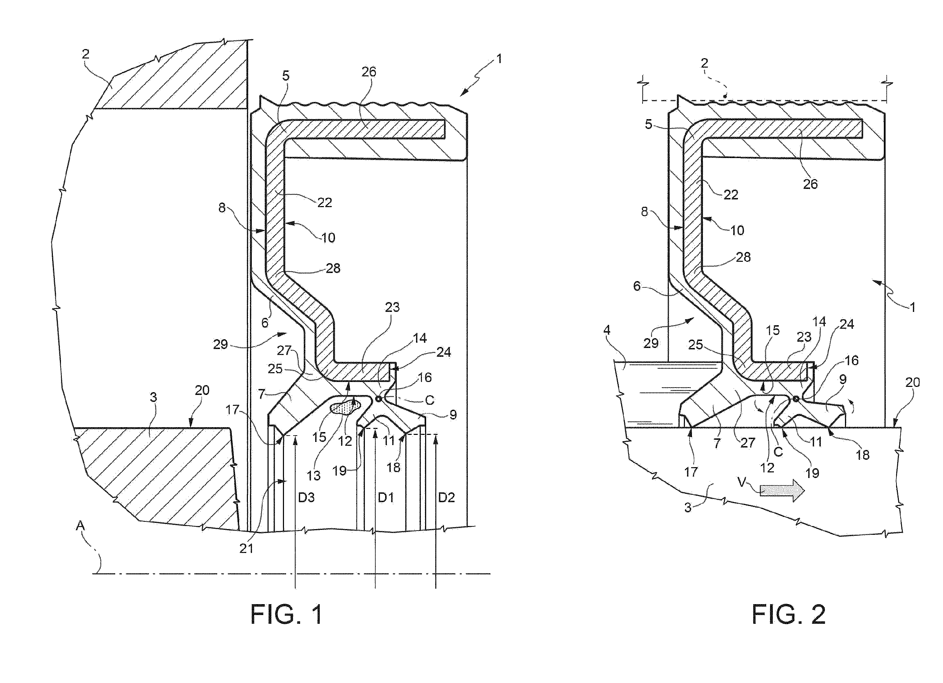

With reference to figures 1 and 2, reference numeral 1 denotes a sealing device particularly suitable for being interposed between a first mechanical element 2 and a second mechanical element 3, in particular belonging to an electric household appliance (a known washing machine, not shown for simplicity) and between which a washing fluid 4 is present in use (figure 2), preferably but non exclusively defined by a rotating shaft 3 for a drum (not shown) of the washing machine and by a washing tank 2 inside which the cited drum rotates in use; shaft 3 is supported in a protruding manner, according to a known arrangement, by at least one rolling bearing protected from the washing fluid 4 (water) by the sealing device 1.

The sealing device 1 comprises a rigid annular shield 5 adapted to be integrally restrained, in use, to the mechanical element 2, which is stationary in use, and an annular sealing element 6 made of elastomeric material and integrally carried by shield 5.

The sealing element 6 comprises a first elastically deformable annular lip 7 which, in radial section, obliquely extends so as to protrude from shield 5, radially towards the inside of shield 5 and axially from the side of a first face 8 of shield 5. The sealing element 6 further comprises a second elastically deformable annular lip 9 which, in radial section, obliquely extends so as to protrude from shield 5, radially towards the inside of shield 5 and axially from the side of a second face 10 of the shield, opposite to the first face 8.

According to an aspect of the invention, the sealing element 6 also comprises a third elastically deformable annular lip 11 which, in radial section, obliquely extends so as to protrude from shield 5 and radially towards the inside of shield 5 and which is arranged, according to an axial direction, i.e. according to a direction parallel to a symmetry axis A of the annular shield 5, between the first lip 7 and the second lip 9.

Lip 11 axially extends from the same side as the first lip 7 (i.e. from the side of face 8) and is oriented and sized so as to remain always axially spaced apart from lip 7, both in underformed conditions (figure 1) and in deformed conditions (figure 2); an annular chamber 12 filled in use (figure 1) with lubricating grease 13 is thus defined between lips 7 and 11.

Moreover, lip 11 integrally forms a V-shaped rocker-arm structure in radial section with lip 9: in fact, lips 9 and 11 obliquely extend so as to protrude in opposite directions from a common annular root portion 14 of the elastomeric annular element 6, thus forming a V in radial section therebetween, having its vertex arranged at the root portion 14 and radially facing outwards.

In particular, the annular root portion 14 radially extends so as to protrude from a radially inner edge 15 of shield 5, radially towards the inside of shield 5 and, in use, towards the mechanical element 3, and it has a narrow portion 16 arranged substantially on the middle line measured in an axial direction, so as to define a common elastic hinge C for the second lip 9 and the third lip 11, which elastic hinge C radially connects lips 9 and 11, in a rocker-arm pivoting manner, with edge 15.

According to the invention, in combination with the above-described structural features, lips 7, 9 and 11 are radially delimited towards the interior by respective edges, respectively indicated with reference numerals 17, 18 and 19 which, with lips 7, 9, 11 in underformed conditions, have a substantially circular shape and which have diameters D chosen so that edges 17 and 18 have respective diameters D3 and D2 smaller than diameter D1 of edge 19 of the third lip 11.

In particular, diameter D1 is chosen so as to be larger than the diameter of the mechanical element (rotating shaft) 3, while diameters D3 and D2 are chosen so that lips 7 and 9 interfere in use, either directly or indirectly, with shaft 3. More specifically, lips 7, 9 and 11 are adapted in use (figure 2) to directly cooperate by sliding on an outer surface 20 of shaft 3, or, according to a possible variant not shown for simplicity, they may cooperate in use only indirectly with shaft 3, for example by interposition of a second shield (not shown) between shield 5 and element 3, integral to element 3 and adapted to receive lips 7, 9 and 11 in sliding contact.

Lip 7 is the main sealing lip and axially extends, in use, in a direction opposite to an insertion direction V (figure 2) of the second mechanical element 3 into an axial through passage 21 (figure 1) of the sealing device 1, passage 21 radially delimited on the exterior by the annular lips 7, 9 and 11 and coaxial to axis A. In particular, the first lip 7 is the one, in use, facing the washing fluid 4 present between the mechanical elements 2 and 3.

The diameter of edges 18 and 19 of lips 9 and 11 and the length of axial extension of lips 9 and 11 are chosen in combination with each other so that, in use, the second lip 9 always interferes, either directly or indirectly ("indirectly" according to the above-mentioned meaning with regard to the above-mentioned possible variant not shown), with the second mechanical element 3 to produce a rocker-arm rotation of the V structure defined by lips 9 and 11 obtained integrally with and protruding from the root portion 14, about the common elastic hinge C, according to the arrows shown in figure 2, upon the insertion in the axial direction (according to direction V) of the second mechanical element 3 into the axial passage 21 delimited by the annular lips 7, 9 and 11.

In particular, a rocker-arm rotation of the second and third lips 9 and 11 about the common elastic hinge C defined by the narrow portion 16 of the common root portion 14, is carried out, due to the above-described difference between diameters D2 and D1, in such a direction as to move edge 19 of the third lip 11 away from lip 7, as shown by the left curved arrow in figure 2, and produces a radial displacement of edge 19 towards the symmetry axis A, coinciding in use with a relative rotation axis of the first and second mechanical elements 2 and 3.

Such rotation makes, in use, edge 19 of lip 11 interfere, either directly or indirectly (by "indirectly" meaning what specified above with reference to the above-mentioned possible variant not shown), with the second mechanical element 3.

Moreover, lip 19 is oriented so as to axially project into the annular chamber 12 defined between it and lip 7, so as to be adapted to retain in use the lubricating grease 13 in a radial direction therein, which grease therefore cannot "drop" out of chamber 12.

The annular shield 5 comprises a flange portion 22 defining the first and second faces 8 and 10 of shield 5 with its own respective opposite axial surfaces; shield 5 further comprises a first radially inner sleeve portion 23, which defines the radially inner edge 15 and which axially extends so as to protrude from the flange portion 22, over a predetermined axial length, from the side opposite to the first face 8 and to the axial extension direction of the first lip 7.

The annular root portion 14 of the second and third lips 9 and 11 radially extends so as to protrude from a first end 24 of the sleeve portion 23, opposite to the flange portion 22 and defining the free end of the sleeve portion 23; vice versa, the first lip 7 radially extends so as to protrude from a second end 25 of the sleeve portion 23; end 25 is opposite to end 24 and is immediately adjacent to the flange portion 22.

The annular shield 5 further comprises a second radially external sleeve portion 26, which axially extends so as to protrude from the flange portion 22, from the side opposite to face 8 and to the axial extension direction of lip 7 and adapted, in use, to couple with the first mechanical element 2 in an angularly integral and substantially known manner.

In particular, the sleeve portion 26 is at least partially embedded in the annular sealing element 6, which extends over the first face 8 starting from a root portion 27 of lip 7 and, again starting from the root portion 7, over the sleeve portion 23, radially on the inside and up to the common root portion 14 of lips 9 and 11.

In order to control the axial overall dimensions, the flange portion 22 of the annular shield 5 is provided in the radial section and radially inwards, with an axial fold 28 directed from the side opposite to the axial extension direction of lip 25 so as to define an annular shallow recess 29 in which lip 7 projects from the side of face 8.

In this way, while the axial overall dimensions of the sealing device 1 are controlled, a sliding seal is obtained in use on shaft 3 implemented by all the three lips 7, 9 and 11 on a stretch of axial length almost equal to the axial overall dimensions of device 1. Grease 13 is easily retained in chamber 12 but, above all, it cannot be pushed away, wholly or partly, as it happens instead in known sealing assemblies, when the shaft or element 3 is inserted into the through passage 21, due to the fact that lips 7 and 11 axially extend from the same side and are actually substantially or almost parallel.

Such a retaining action of grease 13 is made even more effective by the fact that lip 11 forms a single V-shaped, rocker-arm operating element, with lip 9, which rotates about hinge C, and by the relative dimensions of lips 9 and 11. In fact, the interference between lip 9 and element 3 causes, in the assembly step 1, the rotation in opposite directions of lip 9, which moves away from axis A, and of lip 11, which on the other hand approaches axis A, thereby interfering with element 3 while, in the first assembly step, when lip 9 has not "touched" element 3 yet, a predetermined radial clearance exists between lip 11 and element 3.

On the one hand, this "rotation" allows the removal of grease 13 to be prevented more effectively and above all, it allows lip 11 to be made fluid-tightly operating towards the washing fluid 4, due to the fact that lips 7 and 11 are oriented towards the same side. The dynamic sealing action towards fluid 4 is thus doubled and a correct lubrication of edge 17 of lip 7 is ensured at the same time, which extends the operating life thereof. Moreover, the interference of lip 9 is reduced, thereby reducing frictions.

## Claims

1. An annular sealing device (1) to be inserted between a first (2) and a second (3) relatively rotating mechanical elements, in particular belonging to an electric household appliance and between which a washing fluid (4) is present in use, the device comprising a rigid annular shield (5), adapted to be integrally restrained, in use, to the first mechanical element (2), and an annular sealing element (6) made of elastomeric material and integrally carried by the shield (5), comprising: a first elastically deformable annular lip (7) which, in radial section, obliquely extends so as to protrude from the shield, radially towards the interior of the shield and axially from the side of a first face (8) of the shield; a second elastically deformable annular lip (9) which, in radial section, obliquely extends so as to protrude from the shield, radially towards the interior the shield and axially from the side of a second face (10) of the shield, opposite to the first face (8); and a third elastically deformable annular lip (11) which, in radial section, obliquely extends so as to protrude from the shield (5) and radially towards the interior of the shield and which is arranged, according to an axial direction, between the first (7) and second (9) lips; **characterized in that**, in combination:
i- the third lip (11) axially extends from the same side as the first lip (7), so as to remain always axially spaced apart from the first lip (7) and to define, between the first and third lips, an annular chamber (12) filled with lubricating grease (13) in use;
ii- the second and third lips (9, 11) extend so as to protrude from a common annular root portion (14) of the elastomeric annular element, thus forming a V in radial section therebetween, having its vertex arranged at the root portion (14) and radially facing outwards;
iii- the annular root portion (14) radially extends so as to protrude from a radially inner edge (15) of the shield, radially towards the interior of the shield (5) and, in use, towards the second mechanical element (3), and substantially has a narrow portion (16) on the middle line, measured in an axial direction, so as to define a common elastic hinge (C) for the second and third lips (9,11), which elastic hinge radially connects the second and third lips (9,11) to the edge (15) of the shield;
iv- the first, second and third lips (7,9,11) are radially internally delimited by respective edges (17,18,19) which have a substantially circular shape when the lips (7,9,11) are undeformed; and
v- the edges (17,18) of the first (7) and second (9) lips have a diameter (D3,D2) smaller than the diameter (D1) of the edge (19) of the third lip (11).

2. A sealing device according to claim 1, **characterized in that** the first lip (7) axially extends, in use, in a sense opposite to a sense of an insertion direction (V) of the second mechanical element (3) into an axial through passage (21) of the sealing device delimited by the annular lips (7,9,11).

3. A sealing device according to claim 2, **characterized in that** the diameter of the edges (18,19) of the second and third lips (9,11) and a length of axial extension of the second and third lips (9,11) are chosen so that, in use, the second lip (9) always interferes, either directly or indirectly, with the second mechanical element (3) to produce a rocker-arm rotation of the V defined by the second and third lips about the common elastic hinge (C) upon the insertion in the axial direction (V) of the second mechanical element (3) into the axial passage (21) delimited by the annular lips.

4. A sealing device according to one of the preceding claims, **characterized in that** a rocker-arm rotation of the second and third lips (9,11) about the common elastic hinge (C) in such a direction as to move the edge (19) of the third lip (11) away from the first lip (7) produces a radial displacement of the edge of the third lip (11) towards a symmetry axis (A) of the annular shield coinciding with a relative rotation axis of the first and second mechanical elements (2,3) and so as to make, in use, the edge (19) of the third lip (11) interfere, either directly or indirectly, with the second mechanical element (3).

5. A sealing device according to one of the preceding claims, **characterized in that** the first lip (7) faces in use a washing fluid (4) between the first and second mechanical elements (2,3).

6. A sealing device according to one of the preceding claims, **characterized in that** the annular shield (5) comprises a flange portion (22) defining the first and second faces (8,10) of the shield with its own respective opposite axial surfaces, and a first radially inner sleeve portion (23), which defines the radially inner edge (15) of the shield and which axially extends so as to protrude from the flange portion (22) over a predetermined axial length, from the side opposite to the first face (8) and to the axial extension direction of the first lip (7); the annular root portion (14) of the second and third lips radially extending so as to protrude from a first end (24) of the first sleeve portion (23), opposite to the flange portion (22) and defining the free end of the sleeve portion; and the first lip (7) radially extending so as to protrude from a second end (25) of the first sleeve portion (23), opposite to the first end and immediately adjacent to the flange portion (22).

7. A sealing device according to claim 6, **characterized in that** the annular shield (5) comprises a second radially external sleeve portion (26), which axially extends so as to protrude from the flange portion (22), from the side opposite to the first face (8) and to the axial extension direction of the first lip (7), adapted in use to couple with the first mechanical element (2) in an angularly integral manner.

8. A sealing device according to claim 7, **characterized in that** the second sleeve portion is at least partially embedded in the annular sealing element.

9. A sealing device according to claim 8, **characterized in that** the annular sealing element (6) extends over the first face (8) of the shield (5) from a root portion (27) of the first lip (7) and, again from the root portion of the first lip, over the first sleeve portion (23) of the shield, radially on the inside and up to the common root portion (14) of the second and third lips (9,11).

10. A sealing device according to one of the claims from 6 to 9, **characterized in that** the flange portion (22) of the annular shield is provided in the radial section, radially inwards, with an axial fold (28) directed from the side opposite to the axial extension direction of the first lip so as to define an annular shallow recess (29) in which the first lip (7) projects from the side of the first face (8).

11. A sealing device according to any one of the preceding claims, **characterized in that** the third lip (11) axially projects into the annular chamber (12) defined between the first and third lips, so as to be adapted to retain in use the lubricating grease (13) in the radial direction therein.
